# EUROPÄISCHE PATENTSCHRIFT

(11) **EP 2 521 470 B1**
(45) Veröffentlichungstag und Bekanntmachung des Hinweises auf die Patenterteilung: **12.03.2014**
(21) Anmeldenummer: 12717042.1
(22) Anmeldetag: 14.03.2012
(51) Int. Cl.: A47J 27/00, A47J 27/14, A47J 36/02

(54) **VERFAHREN ZUR HERSTELLUNG EINES GASTRO-BEHÄLTERS UND GASTRO-BEHÄLTER AUS BLECH**
METHOD FOR PRODUCING A GASTRONOMY CONTAINER AND GASTRONOMY CONTAINER MADE OF SHEET METAL
PROCÉDÉ DE PRODUCTION D'UN BAC ALIMENTAIRE CONFORME À LA NORME GASTRO ET BAC GASTRONORME EN TÔLE

(43) Veröffentlichungstag der Anmeldung: 14.11.2012
(73) Patentinhaber: Hakemann, Fritz, 49424 Goldenstedt (DE)
(72) Erfinder: Hakemann, Fritz, 49424 Goldenstedt (DE)
(74) Vertreter: Heim, Hans-Karl
(86) Internationale Anmeldenummer: PCT/EP2012/001155
(87) Internationale Veröffentlichungsnummer: WO 2012/100965

(56) Entgegenhaltungen:
- EP-A1- 0 945 096
- DE-A1-102004 012 367

## Beschreibung

Die Erfindung betrifft ein Verfahren zur Herstellung eines Gastro-Behälters aus Blech, insbesondere eines einwandigen Gastro-Behälters, gemäß Oberbegriff des Anspruchs 1 sowie einen Gastro-Behälter mit mindestens einer Behälterwandung gemäß Oberbegriff des Anspruchs 10.

Unter der Bezeichnung Gastro-Behälter wird insbesondere ein Behälter verstanden, der zur Aufnahme von Speisen und Lebensmitteln bestimmt ist und diese Lebensmittel auf einer gewünschten Temperatur, insbesondere warmhalten soll. Ein derartiger Gastro-Behälter ist in der DE 10 2004 012 367 A1 beschrieben.
Derartige Gastro-Behälter werden häufig in der Gemeinschaftsverpflegung eingesetzt, also zum Beispiel in Kantinen, und dort in die Ausgabetheke eingelassen, so dass die Gastro-Behälter mit ihrem Randbereich auf der benachbarten Oberfläche der Theke aufliegen.
Die Erfindung betrifft jedoch auch andere Behälter, zum Beispiel in Eisdielen, wobei dort die Beibehaltung der niedrigen Temperatur eine primäre Anforderung ist. Übereinstimmend besteht jedoch bei diesen Behältern für Lebensmittel und derartige Güter der Anspruch, höchsten Hygieneerfordernissen gerecht zu werden.

Ein Verfahren zur Herstellung eines Gastro-Behälters aus Blech gemäß Oberbegriff ist aus der genannten DE 10 2004 012 367 A1 bekannt. Der darin beschriebene Behälter wird im Tiefziehverfahren hergestellt, wobei die Materialstärke der Wände des Behälters etwa 1,25 mm beträgt.

Aus der DE 692 17 001 T2 ist ein Behälter als dünnwandiger, tiefgezogener Becher bekannt. Der Becher wird gemäß dieser Druckschrift aus einem mit einem organischen Harz beschichteten Aufbau einer oberflächenbehandelten Stahlplatte hergestellt, wobei eine Dicke des Bechers von etwa 0,17 bis 0,30 mm erreicht wird.
Allerdings wird bei dieser Materialwahl nur eine relativ geringe Höhe des Bechers von etwa 127 mm mit einem Durchmesser von etwa 63 mm erreicht.
Größere Abmessungen von Behältern, insbesondere in der Tiefe aber auch im Durchmesser, sind bei dem letztgenannten Verfahren und den gewählten Materialien nicht erreichbar.

Aus der EP 1 536 899 B1 ist ein Verfahren zur Herstellung einer Metallschale beziehungsweise eines Bechers im Tiefziehverfahren bekannt. Zwar werden zunächst Durchmesser dieser Gegenstände von 10 bis 50 mm und Höhen von 50 bis 3.000 mm bei einer bevorzugten Wandstärke von 1,3 bis 1,7 mm genannt. Das konkrete Beispiel wird jedoch auf eine bevorzugte Höhe von 20 bis 50 mm abgestellt.

Ein anderer Behälter, der als Paletten-Behälter für Flüssigkeiten dient, ist in der EP 0 633 200 B1 beschrieben.
Bei einem in dieser Druckschrift beschriebenen ein- oder doppelwandigen Innenbehälter aus Stahlblech, der mit einem äußeren Gittermantel aus sich kreuzenden Stäben aus Metall geschützt ist, kann die üblicherweise vorgesehene Wandstärke des einwandigen Behälters von 2,5 bis 3 mm auf etwa 1,2 bis 1,5 mm reduziert werden. Eine geringere Wandstärke wird jedoch bei diesem Behälter aus Stahlblech trotz des äußeren Gittermantels aus Metallstäben nicht realisiert.

Die vorausgehend genannten Alternativen von tiefgezogenen oder partiell tiefgezogenen Behältern im Stand der Technik zeigen, dass bei relativ dünnen Materialstärken der Wände nur sowohl im Durchmesser als auch in der Höhe beziehungsweise der Tiefe kleine Behälter hergestellt werden können. Sofern größere Behälter erzeugt werden sollen, wie zum Beispiel gemäß der EP 0 633 200 B1, ist man trotz eines äußeren Schutzgitters um den Behälter auf Wandstärken von 1,2 bis 1,5 mm angewiesen.

Der Erfindung liegt daher die **Aufgabe** zugrunde, ein Verfahren zur Herstellung eines Gastro-Behälters aus Blech und einen Gastro-Behälter selbst aufzuzeigen, die mit hoher Materialeinsparung und dementsprechend kostengünstig realisierbar sind, wobei der entsprechende Behälter auch mit einer relativ großen Gesamthöhe beziehungsweise Tiefe dünnwandig in einfachen Verfahrensschritten herstellbar ist.

Diese Aufgabe wird bei einem erfindungsgemäßen Verfahren durch die Merkmale des Anspruchs 1 und bei einem entsprechenden Behälter durch die Merkmale des Anspruchs 10 gelöst.

Ein Kerngedanke der Erfindung kann darin gesehen werden, als Material ein Dünnblech mit einer Stärke < 1,0 mm, insbesondere im Bereich von 0,4 bis 0,8 mm, und speziell von 0,4 bis 0,6 mm, zu wählen und bei dieser Materialstärke das Tiefziehverfahren zur wesentlichen Kontur- und Formgebung einzusetzen. Es können hierdurch bereits Ecken und Kanten gerundet hergestellt werden, so dass auch höchste Hygieneanforderungen erfüllt werden. Der Verfahrensschritt des Tiefziehens wird jedoch nur bis zu einer geringen Tiefe des Behälters beziehungsweise der entsprechenden tiefgezogenen Schale beziehungsweise Wanne durchgeführt. Da sich das Tiefziehverfahren bei derart dünnen Wandstärken auch bei mehrmaligem Zwischenglühverfahren nicht über größere Tiefen beziehungsweise Höhen durchführen lässt, geht man den Schritt, einen Trennschnitt zum Beispiel mittels Laser umlaufend um die tiefgezogene Schale anzubringen, so dass ein oberer und ein unterer Behälterbereich erhalten wird. Zwischen den Rändern des durchgeführten Trennschnittes wird dann ein separat aus Flachmaterial geformter Behältermantel eingesetzt, der im Wesentlichen die Gesamthöhe beziehungsweise Tiefe des hergestellten Behälters bestimmt.

Der Behältermantel und die Ränder des oberen und unteren Behälterbereiches werden hierbei zweckmäßigerweise miteinander verschweißt, wobei die Schweißnaht insbesondere auf die Außenseite verlegt wird.

Auch bei mehreckigen, insbesondere viereckigen Querschnittskonturen lassen sich bei diesen Verfahrensschritten gerundete Eck- und Randbereiche herstellen, so dass die Hygieneanforderungen erfüllt werden können. Mittels des eingesetzten Behältermantels, der beispielsweise etwa ⁴/₅ der Gesamthöhe des Behälters ausmachen kann, lassen sich hierbei in relativ einfacher aber auch sehr flexibler Weise Tiefen des Behälters von 400 bis 700 mm und mehr herstellen. Im Hinblick auf die Hygieneerfordernisse kommt als Werkstoff insbesondere korrosionsfester Edelstahl oder CNS-Werkstoffe, Alu, Messing und derartige Legierungen zur Anwendung, wobei die wesentliche Kostenreduzierung durch die Wandstärke des Dünnbleches und die einfachen unproblematischen Verfahrensschritte bei der Herstellung erreicht werden.

Da bei einem einwandigen Behälter im Hinblick auf die Temperatur- beziehungsweise Wärmeübertragung eine kritische Zone zwischen Behälterinnenwand und Behälter-Auflagerand besteht, geht man erfindungsgemäß auch den Weg, einen doppelwandigen Behälter erfindungsgemäß herzustellen, wobei ergänzend eine Trennung des Auflagerandes gegenüber der Innenwand des Innenbehälters durchgeführt wird. Zu diesem Zweck kann vorteilhafterweise der horizontal auskragende Auflagerand mit einem Trennschnitt, zum Beispiel mittels Laser, von der Innenwand des Behälters getrennt werden. Zur Verbindung des Auflagerandes und der Innenwand wird vorteilhafterweise ein temperaturisolierendes Kunststoffprofil eingesetzt, das einen sehr kleinen Wärmeübertragungskoeffizienten aufweist und zum Beispiel aus einen Voll-oder porösen Kunststoff besteht. Dieser derart hergestellte Innenbehälter wird nachfolgend sozusagen in einen erfindungsgemäß hergestellten Außenbehälter eingesetzt und der Zwischenraum zwischen Innenwand des Innenbehälters und der äußeren Wand des Außenbehälters wird darüber hinaus zweckmäßigerweise mit einer Druckschaum-Isolierung zur weiteren Verbesserung der Temperaturisolation des doppelwandigen Behälters gefüllt.

Ein derartiger isolierter doppelwandiger Behälter eignet sich daher in hervorragender Weise als Kühl- oder Wärmewanne beziehungsweise für Wärmeschränke.

In einer weiteren vorteilhaften Ausführungsform wird der beim Tiefziehen erstellte Auflagerand mit einer nach innen weisenden Stufe ausgestattet. Auf dieser Stufe kann dann der Trennschnitt zur Separierung der Innenwand von dem Auflagerand angesetzt werden. Die auf diese Weise getrennten Ränder werden form- oder kraftschlüssig in einem um die Behälteröffnung umlaufenden Kunststoffprofil fixiert, so dass darüber die wesentliche Temperaturtrennung von innen nach außen und umgekehrt erfolgt. Auch bei dieser Alternative wird der erfindungsgemäß erzeugte Innenbehälter in einen Außenbehälter eingesetzt, wobei die Unterseite des Auflagerandes des Innenbehälters auf einen nach außen ragenden oberen Randbereich des Außenbehälters abgestützt und zum Beispiel mittels Punktschweißen fixiert werden kann.

Als Kunststoffprofil eignet sich insbesondere ein Material aus der Klasse der Polyethylene oder deren Derivate oder auf Polyvenyl-Basis.

Die Zwischenraumisolierung zwischen Innenwand und Außenwand kann zweckmäßigerweise mittels eines Druckschaums auf der Basis Polyurethane oder mit Polystyrol realisiert werden.

Der nach unten weisende Steg des Kunststoffprofiles ist nach innen zeigend vorteilhafterweise mit einer Rasterung ausgestattet, in die der obere Rand des Innenbehälters insbesondere formschlüssig aber auch kraftschlüssig eingesetzt beziehungsweise eingespannt werden kann. Auf diese Weise lässt sich eine einfache aber stabile Verbindung zwischen Innenwand und Auflagerand über das Kunststoffprofil erzeugen.

In einer besonders vorteilhaften Ausführungsform eines doppelwandigen Behälters wird unterhalb des horizontal verlaufenden Auflagerandes eine Hartstoffeinlage, zum Beispiel aus Hartholz oder Hartkunststoff, bevorzugt auf Duroplastbasis, eingebracht. Mittels dieser Hartstoffeinlage ist es dann auch möglich, einen entsprechenden doppelwandigen Behälter mit etwa viereckförmiger, aber abgerundeter, Außenkontur mittels Befestigungsmitteln, wie zum Beispiel Schrauben, an einer Gehäusewand anzubringen. Gerade bei etwa viereckförmigen, abgerundeten Behältern ist es möglich, mehrere dieser Behälter in Reihe oder hintereinander anzuordnen und insbesondere im Bereich der Hartstoffeinlage miteinander zu befestigen.
Die erfindungsgemäßen Behälter eignen sich daher auch zur Anordnung bzw. Anbringung in Wärmeschränken, Kühlschränken, Schrankgehäusen, auch in Trockenschrankgehäusen.
In diesem Bereich der Hartstoffeinlage können dann auch Gehäusetüren, Auszüge oder Stellschienen angeschlagen werden.
Bei Wärmeschränken kann die Isolation gegenüber Wänden oder Temperatursenken mittels wärmebeständigen Materials, zum Beispiel aus Keramik, Glasfasergewebe oder Kunstharzgewebe, erzeugt werden.
Es ist daher nicht nur die Ein- und Anbringung von erfindungsgemäßen Behältern, insbesondere doppelwandigen Behältern, in Schränken oder Gehäusen möglich, sondern durch die spezielle viereckförmige und abgerundete Kontur wird eine verbesserte Raumnutzung mit derartigen Behältern im Vergleich zu rein zylindrischen und runden Behältern geschaffen.

Das erfindungsgemäße Verfahren und der derart hergestellte Behälter führen daher zu einer erheblichen Kostenreduzierung bei derartigen Gastro-Behältern, wobei die Möglichkeit, auf unterschiedlichste Kundenwünsche in Bezug auf Tiefe und Form beziehungsweise Kontur derartiger Behälter einzugehen, besteht.

Die Erfindung wird nachfolgend anhand schematischer Zeichnungen mehrerer Ausführungsbeispiele noch näher erläutert. Es zeigen:
- Fig. 1:: Eine Draufsicht auf einen etwa viereckförmig gestalteten Gastro-Behälter mit gerundeten Ecken;
- Fig. 2:: den Gastro-Behälter nach Fig. 1 in der Ansicht der Schnittlinie A-A mit eingezeichnetem Trennschnitt;
- Fig. 3:: eine seitliche Ansicht des wannenförmigen Behältnisses nach Figuren 1, 2 mit im Trennschnitt dazwischengesetztem Behältermantel über die Höhe H;
- Fig. 4:: eine vergrößerte Schnittdarstellung des mittels Kreis markierten Bereiches eines Behälters nach Fig. 3, jedoch für eine doppelwandige Ausführungsform eines Behälters;
- Fig. 5:: den schematischen vertikalen Schnitt des Auflagerandes nach Fig. 4 mit einer prinzipmäßigen Konstruktion für einen doppelwandigen Behälter;
- Fig. 6:: eine weitere Ausführungsform für die Herstellung eines doppelwandigen Behälters in einem vertikalen Schnitt des oberen Behälterbereiches mit Auflagerand;
- Fig. 7:: die Konstruktion nach Fig. 6 mit durchgeführtem vertikalen Trennschnitt im Übergangsbereich von der Innenwand zum Auflagerand, und
- Fig. 8:: die Komplettierung des oberen Bereiches nach Fig. 6 und 7 zu einem doppelwandigen Behälter.

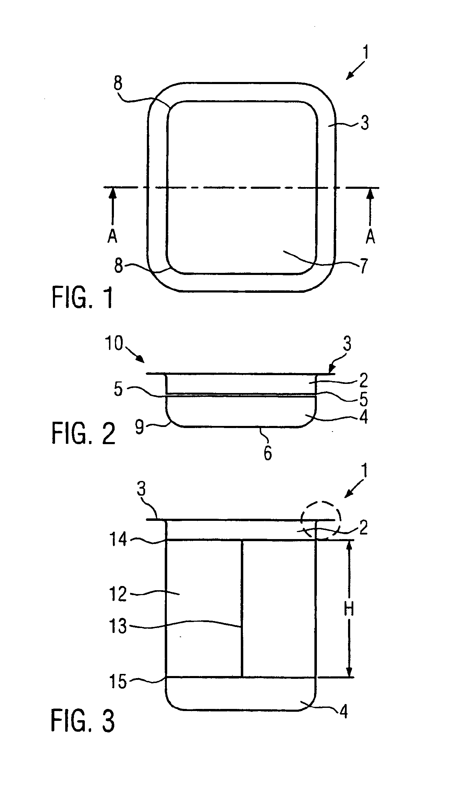

In den Figuren 1 bis 3 sind die wesentlichen Verfahrensschritte dargestellt, die zur Herstellung eines Gastro-Behälters aus Blech mit weitgehend beliebiger Gesamttiefe beziehungsweise Gesamthöhe durchgeführt werden.
In Fig. 1 ist die Draufsicht auf einen Behälter 1 dargestellt, der einen äußeren Auflagerand 3 aufweist, welcher eine Öffnung 7 des Behälters 1 umgibt. Der Behälter 1 hat näherungsweise Viereckkontur, in der insbesondere die inneren Eckbereiche gerundet, als Eckrundung, ausgebildet sind.
Der Behälter 1 besteht bevorzugterweise aus einem nicht-rostenden Stahl als Dünnblech, vorzugsweise mit einer Stärke im Bereich von 0,4 bis 0,7 mm.

In Fig. 2 ist die Seitenansicht des Behälters 1 längs der Linie A-A dargestellt.

Tiefziehvorrichtungen, welche zur Erstellung eines einstückigen Behältnisses aus einem Blechmaterial erforderlich sind, sind bekannt und in den Figuren nicht dargestellt.
Gemäß Fig. 2 wird der Behälter 1 zunächst in Art einer Wanne oder Schale in einem Tiefziehvorgang des Dünnbleches mit einer relativ geringen Tiefe erzeugt. Der Behälter 1 hat in dieser Wannenform einen oberen Behälterbereich 2 und einen unteren Behälterbereich 4. Der untere Behälterbereich 4 umfasst auch den Boden 6 mit nach oben ansteigenden Bodenrundungen 9. Umlaufend um die Öffnung 7 ist die flanschartige auskragende Auflagerand 3 vorhanden.

Da gerade bei Dünnblechen das Problem besteht, dass man gegebenenfalls auch trotz mehrmaligem Zwischenglühverfahren nur eine begrenzte Tiefe tiefziehen kann, führt man bei der Behälterwanne 10 etwa im mittleren Bereich einen umlaufenden Trennschnitt 5 durch. Oberer und unterer Behälterbereich 2, 4 sind somit getrennt.

Aufgrund dieses Schrittes ist es nunmehr möglich, wie in Fig. 3 dargestellt, einen Behältermantel 12, der gegebenenfalls eine längs- beziehungsweise vertikal verlaufende Schweißnaht 13 aufweist, zwischen den oberen und unteren Behälterbereich 2, 4 einzusetzen. Die Höhe H des Behältermantels 12 kann dabei nahezu eine beliebige Länge einnehmen. Bei Gastro-Behältern 1 wird eine Höhe H von etwa 400 bis 700 mm bevorzugt verwendet.

Auf diese Weise ist es möglich, Gastro-Behälter 1 mit einer Gesamttiefe vom Auflagerand 3 bis zum Boden 6 von etwa 800 bis 1.000 mm, aber auch mit größerer Abmessung, herzustellen.
Der in Fig. 3 eingesetzte Behältermantel 12 kann für das Endprodukt entsprechend der umlaufenden Kontur mittels entsprechender Biegeschritte erzeugt werden und anschließend über Schweißnähte 14, 15 starr mit dem oberen und unteren Behälterbereich 2, 4 verbunden werden.

Mit den vorausgehend aufgezeigten Verfahrensschritten ist es möglich, einen sehr dünnwandigen Gastro-Behälter 1 mit einer gewünschten Gesamttiefe herzustellen, die auch mittels mehrerer Tiefziehschritte nicht erreichbar ist, wobei durch das Dünnblech eine erhebliche Materialeinsparung erreicht wird. Gleichzeitig werden durch die vorgesehenen Eckrundungen 8 und Bodenrundungen 9, wobei auch weitere Kanten gerundet ausgebildet sein können, höchste Hygieneanforderungen für Lebensmittelbetriebe erfüllt.
Der derart hergestellte einwandige Gastro-Behälter 1 kann in dieser Art in eine Ausnehmung einer Wärmetheke eingesetzt werden, wobei der Auflagerand 3 weitgehend mit der Thekenoberfläche fluchtet.

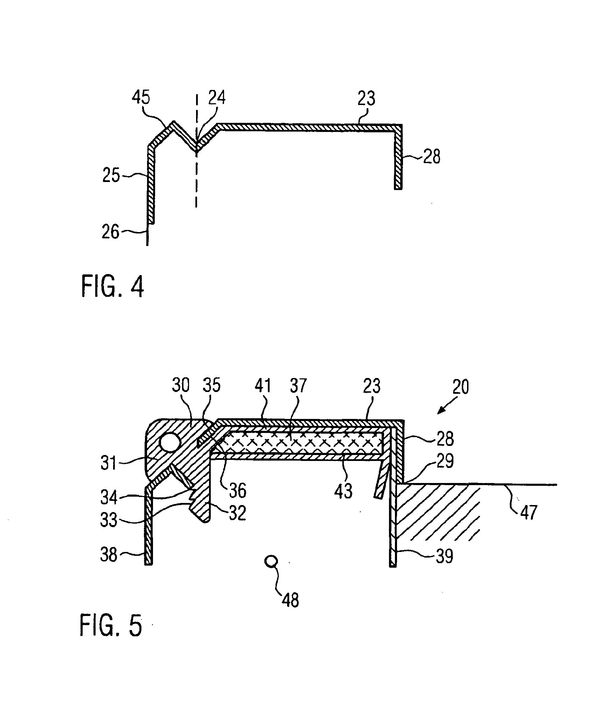

In den nachfolgenden Figuren 4, 5 ist ein temperaturisolierter, doppelwandiger Behälter 20 mit seinen wesentlichen Konstruktionsmerkmalen und Verfahrensschritten der Herstellung mit einem Ausschnitt seines Auflagerandes 23 bruchstückartig gezeigt, wobei dieser Bereich in Fig. 3 mit unterbrochenem Kreis schematisch angedeutet ist.

Der in Fig. 4 gezeigte bruchstückartige Bereich des Auflagerandes 23 entspricht etwa dem kreisförmig markierten Bereich nach Fig. 3.
Es wird zunächst ein wannenartiger Behälter, ähnlich Fig. 2, tiefgezogen und mittels eines ringsumlaufenden Trennschnittes in einen oberen und unteren Behälterbereich getrennt.
Der Auflagerand 23 des oberen Behälterbereiches nach Fig. 4 weist in horizontaler Richtung nach innen gesehen, eine V-förmige Ziehsicke 24 auf, die nach links über eine Abschrägung in einen vertikal nach unten verlaufenden Schenkel 25 der Innenwand 26 übergeht.

Der Auflagerand 23 hat im Beispiel einen im Außenbereich nach unten ragenden Schenkel 28.

Nach Durchführung des horizontalen Trennschnittes analog zu 5 nach Fig. 2, wird im Beispiel nach Fig. 4 ein vertikaler Trennschnitt 27 in der V-förmigen Ziehsicke 24 durchgeführt. Es wird somit ein innerer Teil mit dem Schenkel 25 der Innenwand 26 und ein äußerer Teil mit dem horizontal verlaufenden Auflagerand 23 mit außen liegendem Schenkel 28 erreicht.
Der Trennschnitt 27 erfolgt primär aus dem Grund, die Wärmeleitfähigkeit zwischen Auflagerand 23 und Innenwand 26 in diesem Bereich zu unterbrechen, so dass eine temperaturisolierende Zone zwischen Innenwand 26 und Auflagerand 23 erzeugt wird.

Diese temperaturisolierende Zone wird in Fig. 5 durch ein am oberen Behälterrand umlaufendes Kunststoffprofil 30 realisiert. Dieses temperaturisolierende Kunststoffprofil 30 hat als Grundkörper einen dreieckförmigen Kopf, der nach unten und innen einen vertikalen Schenkel 32 mit einer Rasterung 33 und einen weitgehend horizontal unterhalb des Auflagerandes 23 verlaufenden Schenkel 4 aufweist.
Wie Fig. 5 zeigt, ist die linke, nach unten weisende Trennschnitt-Kante 35 des Auflagerandes 23 in einen Spalt 36 des Kunststoffprofils eingesteckt und aufgenommen.

Andererseits ist der dreieckartige hakenförmige Endbereich 45 (Fig. 4) der Innenwand 38 des Innenbehälters, formschlüssig anliegend am Grundkörper 31 in der Rasterung 33 gehalten.

Im Beispiel nach Fig. 5 ist unterhalb des horizontalen Schenkels 41 des Kunststoffprofils 30 eine Hartstoffeinlage 37, zum Beispiel aus Hartholz oder Hartkunststoff auf Duroplastbasis, eingebracht beziehungsweise mit Presssitz angeordnet. Letzteres kann über einen L-förmigen Abschluss 43 erreicht werden.
Die Hartstoffeinlage 37 kann dann vorgesehen werden, wenn der doppelwandige Behälter 20 zum Beispiel mittels eines externen Befestigungsmittels, wie Schrauben, an einem anderen Gegenstand befestigt werden soll.

Im rechten Bereich der Fig. 5 ist erkennbar, dass der Innenbehälter 38 mit Kunststoffprofil 30 und Auflagerand 23 sowie abgebogenem Schenkel 28 auf den oberen Rand eines Außenbehälters 39 aufgesetzt beziehungsweise aufgeschoben ist. Der Rand des Außenbehälters 39 kann hierbei form- und kraftschlüssig in den Spalt zwischen Schenkel 28 und der Hartstoffeinlage 37 beziehungsweise dem L-förmigen Abschluss 43 kraft- und formschlüssig aufgenommen werden.

Zur weiteren Verbesserung der Unterbrechung der Temperaturleitfähigkeit zwischen Außenbehälter 39 und Innenbehälter 38 wird der Abstandsraum dazwischen bevorzugt mit einer Druckschaum-Isolierung 48 ausgefüllt.

Zur Erhöhung der stabilisierten Steifigkeit zwischen Innenbehälter 38 und Außenbehälter 39 kann zum Beispiel bodenseitig (nicht gezeigt) ein temperaturisolierender Abstandsblock vorgesehen sein, so dass die Festigkeit des doppelwandigen Behälters 20 verbessert wird.

Mit den ergänzenden Verfahrensschritten nach den Figuren 4 und 5 wird daher ein doppelwandiger, temperaturisolierter Behälter, zum Beispiel für Kühl- und Wärmewannen beziehungsweise -Schränke erreicht, bei denen durch ein umlaufendes Profil zum Beispiel aus Vollkunststoff oder porösem Kunststoff, die Wärmeleitfähigkeit zwischen Auflagerand und Innenwand unterbrochen wird.

Verfahrensmäßig sollte das Kunststoffprofil 30 bevorzugt zunächst in den Eckrundungen (vgl. Fig. 1, Nr. 8) und anschließend in den Längsbereichen angebracht werden, so dass in Art einer Zentrierung ein gleicher Abstandsraum zwischen Innen- und Außenwand erreicht wird.
Der untere Rand 29 am Schenkel 28 kann bei dieser Ausführungsform als Auflagebereich gegen die Oberfläche 47 einer Wärmetheke dienen.

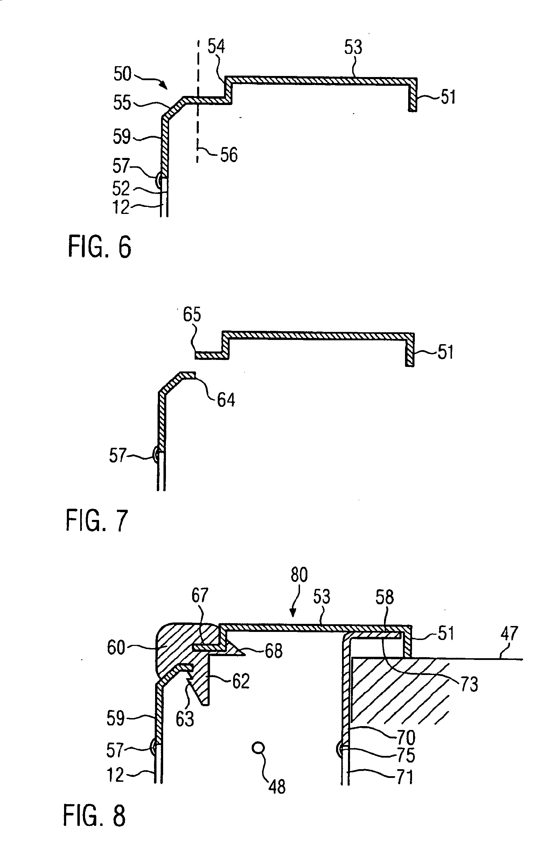

In den Figuren 6, 7 und 8 wird eine alternative Ausführungsform eines doppelwandigen Behälters 80 mit den wesentlichen Herstellungsschritten dazu gezeigt.
Die Fig. 6 zeigt schematisch den oberen Behälterbereich 50 mit Auflagerand 53 und nach unten abgebogenem Auflagesteg 51.
Ein wesentlicher Unterschied im Vergleich zur Form nach Fig. 4 ist im Beispiel nach Fig. 6 die Stufe 54 mit nachfolgender Abschrägung 55 und vertikal nach unten ragendem Übergang zur Innenwand des Behältermantels 12.

Im herstellungstechnischen Verfahren wird der obere Behälterbereich 50 im Bereich der Stufe 54, zum Beispiel durch einen Laser-Trennschnitt längs der Linie 56 in zwei Teile geteilt. Die Schnittlinie entspricht dabei dem Trennschnitt-Rand 64 und oberen Trennschnitt-Rand 65 (Fig. 7).

Im weiteren Verfahren zur Herstellung dieses doppelwandigen Behälters 80 wird zum Innenbereich zeigend ein temperaturisolierendes Kunststoffprofil 60 vorgesehen. Das Kunststoffprofil 60 nimmt im rechten Bereich in einem Spalt 67 den TrennschnittRand 65 auf, wobei über einen horizontalen Steg 68 mit Hintergriff die Stufe 54 im Kunststoffprofil 60 festgelegt wird.
Das Kunststoffprofil 60 weist einen nach unten ragenden vertikalen Schenkel 62 auf, der zum Innenbereich hinweisend eine sägezahnförmige Rasterung 63 hat. Der sich an den Trennschnittrand 64 (Fig. 7) anschließende Bereich der Innenwand 59 wird im Bereich der Abschrägung 55 beziehungsweise bogenförmigen Kontur mindestens formschlüssig an der Unterseite des Kunststoffprofils 60 und Rasterung 63 aufgenommen.

Die in das Kunststoffprofil 60 und die Rasterung 63 hineinragende obere Innenwand 59 ist über eine Schweißraupe 57 beziehungsweise Schweißnaht mit dem Behältermantel 12 fest materialverbunden.
Die bisher beschriebenen Verfahrensschritte nach den Figuren 6, 7 und 8 führen zunächst zu einem durch das Kunststoffprofil 60 wärmeisolierten Innenbehälter.
Anliegend auf der Unterseite 58 des Auflagerandes 53 ist ein flanschartig auskragender oberer Rand 73 eines Außenbehälters 70 gezeigt. Der Behältermantel 71 des Außenbehälters 70 kann zum Beispiel über eine nach innen weisende Schweißnaht 75 starr mit dem oberen Bereich materialverbunden sein. Der durch den Abstand zwischen oberer Innenwand 59 und dem Außenbehälter 70 gebildete Raum wird im Hinblick auf eine bessere Wärmeisolierung und aus Stabilitätsgründen zum Beispiel mit einer Druckschaum-Isolierung 48 ausgefüllt.
Die im Beispiel nach Fig. 8 nach links weisende Schweißraupe 57 kann zweckmäßigerweise auch auf der nach außen weisenden beziehungsweise nach rechts weisenden Seite vorgesehen werden.

Die feste Verbindung auf der Unterseite 58 des Auflagerandes 53 mit dem Rand 73 des Außenbehälters 70 kann zweckmäßigerweise von unten mittels Punktschweißen oder auch mittels Klebeverbindung erfolgen.
In dem in Fig. 8 dargestellten Beispiel kann der nach unten ragende Auflagesteg 51 den doppelwandigen Behälter 80 gegenüber der Oberfläche 47 einer Wärmetheke abstützen, so dass der Behälter 80 einfach in die entsprechende Öffnung der Wärmetheke eingesetzt werden kann.

Die Erfindung schafft Gastro-Behälter sowohl in einwandiger und doppelwandiger, isolierter Ausführungsform mit erheblicher Materialersparnis aufgrund der verwendeten Dünnbleche. Durch die Trennung der im Tiefziehverfahren hergestellten Behälterwanne beziehungsweise -Schale in einen oberen und unteren Bereich mit nachfolgendem Zwischeneinsetzen eines Behältermantels mit gewünschter Höhe beziehungsweise Erstreckung, kann daher kostengünstig und mit Erfüllung der Hygieneerfordernisse ein Gastro-Behälter geschaffen werden, der im Tiefziehverfahren nur schwer oder mit anderen, größeren Wandstärken erreichbar ist.

## Patentansprüche

1. Verfahren zur Herstellung eines Gastro-Behälters aus Blech, insbesondere eines einwandigen Gastro-Behälters (1),
mit einem oberen Behälterbereich (2) mit einer Öffnung (7) und mit flanschartig auskragendem Auflagerand (3), und
mit einem unteren Behälterbereich (4) mit Boden (6),
wobei der obere und untere Behälterbereich (2, 4) eine vorgegebene Behältertiefe aufweisen und mittels Tiefziehen einstückig hergestellt werden,
**dadurch gekennzeichnet,**
**dass** der den oberen und unteren Behälterbereich (2, 4) aufweisende einstückige Behälter (1) mittels eines umlaufenden Trennschnittes (5) in den oberen und unteren Behälterbereich getrennt wird,
**dass** ein rohrartiger Behältermantel (12), der eine definierte Mantelhöhe (H) aufweist, entsprechend der mittels Trennschnitt (5) erreichten Trennkontur von oberem und unterem Behälterbereich (2, 4), separat hergestellt wird,
**dass** der Behältermantel (12) als Zwischenteil zwischen oberem und unterem Behälterbereich eingesetzt wird,
**dass** ein Dünnblech, insbesondere mit einer Stärke im Bereich 0,4 bis 1,0 mm verwendet wird, und
**dass** diese Teile starr (14, 15) miteinander zum integrierten Gastro-Behälter (1) verbunden werden.

2. Verfahren nach Anspruch 1,
**dadurch gekennzeichnet,**
**dass** der Behälter (1) mit einer kreisförmigen, zylindrischen, mehreckigen, insbesondere viereckigen, Querschnittskontur mit gerundeten Eck- und/oder Randbereichen (8, 9) hergestellt wird.

3. Verfahren nach einem der Ansprüche 1 oder 2,
**dadurch gekennzeichnet,**
**dass** der Behältermantel (12) aus Dünnblech als Flachmaterial mittels Biegevorgang der Trennkontur des oberen und unteren Behälterbereichs (2, 4) angepasst wird, und
**dass** die freien Ränder des gebogenen Behältermantels (12) und die Ränder des getrennten oberen und unteren Behälterbereichs (2, 4) materialverbun-den, insbesondere miteinander verschweißt (14, 15) werden.

4. Verfahren nach einem der Ansprüche 1 bis 3, mit doppelwandigem Behälter (20; 80),
**dadurch gekennzeichnet,**
**dass** der Auflagerand (23) des oberen Behälterbereichs (2) benachbart zur Öffnung (7) mittels eines Trennschnittes in einen inneren (34) und einen äußeren Randbereich (35) getrennt wird,
**dass** die zueinander weisenden Ränder (34, 35) am Trennschnitt (27) mittels eines umlaufenden Verbindungsprofils (30; 60), insbesondere temperaturisoliert voneinander fixiert werden,
**dass** ein Innenbehälter (38) mit Behältermantel (12) und unterem Behälterbereich (4) mit Boden (6) hergestellt wird, und
**dass** ein Außenbehälter (39) mit Abstand zum Innenbehälter (38) um diesen hergestellt und mit dem Innenbehälter temperaturisoliert verbunden wird.

5. Verfahren nach Anspruch 4,
**dadurch gekennzeichnet,**
**dass** als Verbindungsprofil (30; 60) ein temperaturisolierendes Kunststoffprofil ausgewählt wird, und
**dass** insbesondere in den Abstandsraum zwischen Innen- und Außenbehälter ein Isoliermaterial, insbesondere ein Druckschaum (48) als Isolierung, eingebracht wird.

6. Verfahren nach Anspruch 4 oder 5,
**dadurch gekennzeichnet,**
**dass** der obere Bereich des Außenbehälters (39) mit dem oberen Behälterbereich des Innenbehälters (38) verbunden, insbesondere fixiert wird.

7. Verfahren nach einem der Ansprüche 4 bis 6,
**dadurch gekennzeichnet,**
**dass** das Kunststoffprofil (30; 60) mit Bereichen zur kraft- und/oder formschlüssigen Aufnahme der zueinander weisenden Ränder (64, 65) des getrennten Auflagerandes (53) des Innenbehälters (38; 59) ausgelegt wird.

8. Verfahren nach einem der Ansprüche 4 bis 7,
**dadurch gekennzeichnet,**
**dass** im Abstandsraum zwischen Innen- und Außenbehälter eine Hartstoffeinlage (37) für externe Befestigungsmittel des Behälters vorgesehen wird.

9. Verfahren nach Anspruch 4,
**dadurch gekennzeichnet,**
**dass** der Außenbehälter und der Innenbehälter mit temperaturisoliertem Auflagerand, separat hergestellt werden, und
**dass** der Innenbehälter in den Außenbehälter insbesondere temperaturisoliert eingesetzt wird.

10. Gastro-Behälter aus Blech
mit mindestens einer Behälterwandung,
**dadurch gekennzeichnet,**
**dass** ein oberer und unterer Behälterbereich (2, 4) einstückig tiefgezogen sind, dass nach einem umlaufenden Trennschnitt (5) zwischen oberem und unterem Behälterbereich (2, 4) ein Behältermantel (12) eingesetzt und starr (14, 15) mit oberem und unterem Behälterbereich verbunden ist, und
**dass** am oberen Behälterbereich (2) ein auskragender Auflagerand (3) vorgesehen ist.

11. Gastro-Behälter nach Anspruch 10,
**dadurch gekennzeichnet,**
**dass** das Blech ein Dünnblech mit einer Stärke im Bereich von 0,4 bis 1,0 mm, insbesondere von 0,4 bis 0,6 mm ist, und
**dass** das Blech insbesondere ein CNS-Blech, Alu-, Messing- oder nichtrostendes Stahlblech ist.

12. Gastro-Behälter nach Anspruch 10 oder 11,
**dadurch gekennzeichnet,**
**dass** der Behälter doppelwandig ausgebildet ist,
**dass** ein Innenbehälter (38) gemäß Anspruch 10 gebildet ist, dessen Auflagerand (23) temperaturisoliert gegenüber der Innenwand (26) ausgebildet ist, dass ein Außenbehälter (70) gemäß Anspruch 10 vorgesehen ist, und dass der Innenbehälter (38) im Außenbehälter (70) aufgenommen ist, und der Abstandsraum zwischen Innen- und Außenbehälter temperaturisoliert (48) ausgelegt ist.

13. Gastro-Behälter nach Anspruch 12,
**dadurch gekennzeichnet,**
**dass** zur Temperaturisolierung des Auflagerandes (23) gegenüber der Innenwand (26) ein umlaufend angebrachtes Kunststoffprofil (30; 60) mit niedrigem Wärmeübertragungskoeffizienten vorgesehen ist.

14. Gastro-Behälter nach Anspruch 13,
**dadurch gekennzeichnet,**
**dass** das Kunststoffprofil (30; 60) form- und/oder kraftschlüssige Aufnahmebereiche (36, 33) für die mittels Trennschnitt getrennten Ränder (34, 35) des Auflagerandes (23) aufweist.

15. Gastro-Behälter nach Anspruch 13 oder 14,
**dadurch gekennzeichnet,**
**dass** das Kunststoffprofil (30; 60) einen form- und /oder kraftschlüssigen Aufnahmebereich, insbesondere eine Rasthalterung (33; 63) für den getrennten oberen Rand (63) der Innenwandung (59) aufweist.

## Claims

1. Method for producing a gastronomy container from sheet metal, in particular a single-walled gastronomy container (1),
having an upper container region (2) with an opening (7) and having a bearing edge (3) overhanging in a flange-like manner,
having a lower container region (4) with a bottom (6),
wherein the upper and lower container region (2, 4) have a predefined container depth and are produced as single-piece by means of deep-drawing,
**characterised in that**
the single-piece container (1) comprising the upper and lower container region (2, 4) is separated by means of a circumferential separating cut (5) into the upper and lower container region,
a tube-like container jacket (12) having a defined jacket height (H), corresponding to the separating contour of the upper and lower container region (2, 4) achieved by means of the separating cut (5), is produced separately,
the container jacket (12) is inserted as an intermediate part between the upper and lower container region,
a thin metal sheet, in particular with a thickness in the range of from 0.4 to 1.0 mm is used,and
these parts (14, 15) are rigidly connected to each other to form the integrated gastronomy container (1).

2. Method according to claim 1,
**characterised in that**
the container (1) is produced with a circular, cylindrical, multi-cornered, in particular square, cross-sectional contour with rounded corner and / or edge regions (8, 9).

3. Method according to one of the claims 1 or 2,
**characterised in that**
the container jacket (12) made of thin sheet metal is adapted as a flat material by means of a bending process to the separating contour of the upper and lower container region (2, 4), and
the free edges of the bent container jacket (12) and the edges of the separate upper and lower container region (2, 4) are materially connected, in particular welded to each other (14, 15).

4. Method according to one of the claims 1 to 3, with double-walled container (20; 80),
**characterised in that**
the bearing edge (23) of the upper container region (2) is separated adjacent to the opening (7) by means of a separating cut into an inner (34) and an outer edge region (35),
the edges (34, 35) pointing towards each other are fixed on the separating cut (27) by means of a circumferential connecting profile (30; 60), in particular being temperature-insulated relative to each other,
an inner container (38) is produced with a container jacket (12) and lower container region (4) with a bottom (6) and
an outer container (39) is produced at a distance from and around the inner container (38) and is connected to the inner container in a temperature-insulating manner.

5. Method according to claim 4,
**characterised in that**
a temperature-insulating plastic profile is selected as said connecting profile (30; 60), and
an insulating material, in particular a pressure foam (48), is incorporated as an insulation in particular in the space between the inner and outer container.

6. Method according to claim 4 or 5,
**characterised in that**
the upper region of the outer container (39) is connected to the upper container region of the inner container (38), in particular being fixed together.

7. Method according to one of the claims 4 to 6,
**characterised in that**
the plastic profile (30; 60) is designed with regions for force-locking and / or shape-locking incorporation of the edges (64, 65), pointing towards each other, of the separate bearing edge (53) of the inner container (38; 59).

8. Method according to one of the claims 4 to 7,
**characterised in that**
a hard material insert (37) is provided in the space between the inner and outer container for external fixing means of the container.

9. Method according to claim 4,
**characterised in that**
the outer container and the inner container, with a temperature-insulated bearing edge, are produced separately, and
the inner container is inserted into the outer container, in particular in a temperature-insulated manner.

10. Gastronomy container made of sheet metal,
having at least one container wall,
**characterised in that**
an upper and a lower container region (2, 4) are deep-drawn in a single-piece,
following a circumferential separating cut (5) between the upper and lower container region (2, 4) a container jacket (12) is inserted and rigidly connected (14, 15) to the upper and lower container region, and
an overhanging bearing edge (3) is provided on the upper container region (2).

11. Gastronomy container according to claim 10,
**characterised in that**
the sheet metal is a thin metal sheet with a thickness in the range of from 0.4 to 1.0 mm, in particular between 0.4 and 0.6 mm, and
the sheet metal is in particular a CNS sheet metal, aluminium, copper or rust-resisting steel sheet.

12. Gastronomy container according to claim 10 or 11,
**characterised in that**
the container is formed in a double-walled manner,
an inner container (38) is formed according to claim 10, of which the bearing edge (23) is formed to be temperature-insulated relative to the inner wall (26),
an outer container (70) is provided according to claim 10, and
the inner container (38) is incorporated in the outer container (70), and the space between the inner and outer container is designed to be temperature-insulated (48).

13. Gastronomy container according to claim 12,
**characterised in that**
for the purpose of temperature insulation of the bearing edge (23) relative to the inner wall (26) a plastic profile (30; 60) arranged so as to be circumferential with a low heat transfer coefficient is provided.

14. Gastronomy container according to claim 13,
**characterised in that**
the plastic profile (30; 60) has shape-locking and / or force-locking receiving areas (36, 33) for the edges (34, 35) of the bearing edge (23) separated by means of the separating cut.

15. Gastronomy container according to claim 13 or 14,
**characterised in that**
the plastic profile (30; 60) has a shape-locking and / or force-locking receiving area, in particular an engaging holder (33; 63), for the separated upper edge (63) of the inner wall (59).

## Revendications

1. Procédé de fabrication d'un bac alimentaire en tôle conforme à la norme dite Gastro, en particulier d'un bac alimentaire (1) conforme à la norme Gastro à une seule paroi,
avec une partie de bac supérieure (2) comportant une ouverture (7) et un rebord d'appui (3) en saillie formant une collerette, et
avec une partie de bac inférieure (4) du bac comprenant un fond (6),
dans lequel les parties de bac supérieure et inférieure (2, 4) comportent une profondeur de bac prédéterminée et sont fabriquées en une seule pièce par emboutissage,
**caractérisé :**
**en ce que** le bac alimentaire (1) fabriqué d'une seule pièce et comprenant les parties de bac supérieure et inférieure (2, 4) est séparé au niveau des parties de bac supérieure et inférieure au moyen d'une découpe de séparation (5) périphérique,
**en ce qu'**une paroi de bac (12) de forme tubulaire, qui comporte une hauteur de paroi (H) déterminée et qui correspond au contour de séparation des parties de bac supérieure et inférieure (2, 4) obtenu au moyen de la découpe de séparation (5), est fabriquée séparément,
**en ce que** la paroi de bac (12) est insérée en tant que partie intermédiaire entre les parties de bac supérieure et inférieure,
**en ce qu'**une tôle mince, ayant plus particulièrement une épaisseur située dans la plage comprise entre 0,4 et 1,0 mm, est utilisée, et
**en ce que** ces parties sont reliées de manière rigide (14, 15) les unes aux autres pour la constitution du bac alimentaire intégré (1) conforme à la norme Gastro.

2. Procédé selon la revendication 1,
**caractérisé :**
**en ce que** le bac (1) est fabriqué avec un contour de sa section transversale qui est circulaire, cylindrique, polygonal, plus particulièrement de forme carrée, et avec des zones de coin et/ou de bordure (8, 9) de forme arrondie.

3. Procédé selon une des revendications 1 ou 2,
**caractérisé :**
**en ce que** la paroi de bac (12) réalisée en tôle mince en tant que matériau de type feuille est adaptée au moyen d'une opération de pliage du contour de séparation des parties de bac supérieure et inférieure (2, 4), et
**en ce que** les bords libres de la paroi de bac (12) pliée et les bords des parties de bac supérieure et inférieure séparées (2, 4) sont reliées par de la matière, et plus particulièrement sont soudés (14, 15) les uns aux autres.

4. Procédé selon une des revendications 1 à 3, avec un bac à double paroi (20 ; 80),
**caractérisé :**
**en ce que** le rebord d'appui (23) de la partie de bac supérieure (2) est séparé,
au voisinage de l'ouverture (7), au moyen d'une découpe de séparation dans une zone de bordure intérieure (34) et dans une zone de bordure extérieure (35),
**en ce que** les bordures (34, 35) orientées l'une vers l'autre, sont fixées l'une à l'autre au niveau de la découpe de séparation (27) au moyen d'un profilé de liaison périphérique (30 ; 60), assurant plus particulièrement une isolation en température,
**en ce qu'**un bac interne (38) est fabriqué avec une paroi de bac (12) et une partie de bac inférieure (4) comportant un fond (6), et
**en ce qu'**un bac externe (39) est fabriqué à une certaine distance du bac interne (38) et tout autour de lui et est relié au bac interne de manière isolée en température.

5. Procédé selon la revendication 4,
**caractérisé :**
**en ce que**, en tant que profilé de liaison (30 ; 60), un profilé en matière plastique assurant une isolation thermique est choisi, et
**en ce que**, en particulier dans le compartiment assurant l'espacement entre les bacs interne et externe, un matériau isolant est introduit, en particulier une mousse (48) destinée à l'isolation.

6. Procédé selon la revendication 4 ou 5,
**caractérisé :**
**en ce que** la partie supérieure du bac externe (39) est reliée, et plus particulièrement fixée, à la partie de bac supérieure du bac interne (38).

7. Procédé selon une des revendications 4 à 6,
**caractérisé :**
**en ce que** le profilé en matière plastique (30 ; 60) est organisé avec des zones pour la réception, par un verrouillage réalisé de manière mécanique et/ou à l'aide de formes, des bordures (64, 65) orientées l'une vers l'autre du rebord d'appui séparé (53) du bac interne (38 ; 59).

8. Procédé selon une des revendications 4 à 7,
**caractérisé :**
**en ce que**, dans le compartiment d'espacement entre les bacs interne et externe, une nappe de matériau dur (37) est prévue pour des moyens de fixation externes du bac.

9. Procédé selon la revendication 4,
**caractérisé :**
**en ce que** le bac externe et le bac interne sont fabriqués de manière séparée, avec un rebord d'appui assurant une isolation en température, et
**en ce que** le bac interne est inséré dans le bac externe en étant, en particulier, isolé en température.

10. Bac alimentaire en tôle conforme à la norme dite Gastro,
avec au moins une paroi de bac,
**caractérisé :**
**en ce que** des parties de bac supérieure et inférieure (2, 4) sont réalisées par emboutissage en une seule pièce,
**en ce qu'**une paroi de bac (12), est insérée, à partir d'une découpe de séparation périphérique (5), entre des parties de bac supérieure et inférieure (2, 4) et est reliée de manière rigide (14, 15) aux parties de bac supérieure et inférieure, et
**en ce que**, au niveau de la partie de bac supérieure (2), un rebord d'appui en saillie (3) est prévu.

11. Bac alimentaire conforme à la norme Gastro selon la revendication 10, **caractérisé :**
**en ce que** la tôle est une tôle mince ayant une épaisseur située dans la plage comprise entre 0,4 et 1,0 mm, plus particulièrement entre 0,4 et 0,6 mm, et
**en ce que** la tôle est plus particulièrement une tôle CNS, une tôle d'aluminium, une tôle de laiton, ou une tôle en feuille d'acier inoxydable.

12. Bac alimentaire conforme à la norme Gastro selon la revendication 10 ou 11, **caractérisé :**
**en ce que** le bac est formé d'une paroi double,
**en ce qu'**il est formé, conformément à la revendication 10, un bac interne (38) dont un rebord d'appui (23) est constitué en étant isolé en température par rapport à la paroi intérieure (26),
**en ce qu'**il est formé, conformément à la revendication 10, un bac externe (70), et
**en ce que** le bac interne (38) est reçu à l'intérieur du bac externe (70), et le compartiment d'espacement entre les bacs interne et externe est organisé pour une isolation en température (48).

13. Bac alimentaire conforme à la norme Gastro selon la revendication 12, **caractérisé :**
**en ce que**, pour l'isolation en température du rebord d'appui (23) par rapport à la paroi intérieure (26), un profilé en matière plastique (30 ; 60) mis en place de manière périphérique et ayant un faible coefficient de transmission thermique est prévu.

14. Bac alimentaire conforme à la norme Gastro selon la revendication 13, **caractérisé :**
**en ce que** le profilé en matière plastique (30 ; 60) comprend une zone de réception (36, 33) à verrouillage réalisé de manière mécanique et/ou à l'aide de formes pour les bords (34, 35), séparés au moyen de la découpe de séparation, du rebord d'appui (23).

15. Bac alimentaire conforme à la norme Gastro selon la revendication 13 ou 14, **caractérisé :**
**en ce que** le profilé en matière plastique (30 ; 60) comprend une zone de réception à verrouillage réalisé de manière mécanique et/ou par assemblage de formes, en particulier un dispositif de fixation encliquetable (33 ; 63), pour le bord supérieur séparé (63) de la paroi intérieure (26).
